# EUROPEAN PATENT SPECIFICATION

(11) **EP 4 175 505 B1**
(45) Date of publication and mention of the grant of the patent: **23.10.2024**
(21) Application number: 21743256.6
(22) Date of filing: 30.06.2021
(51) Int. Cl.: A43B 17/00, A43B 17/14, B29D 35/14, B29C 39/00, B29C 44/00

(54) **PROCESS FOR MAKING AN INSOLE OR FOOTBED FOR SHOES**
VERFAHREN ZUR HERSTELLUNG EINER EINLEGESOHLE ODER FUSSBETT FÜR SCHUHE
PROCÉDÉ DE FABRICATION D'UNE SEMELLE INTÉRIEURE POUR CHAUSSURES

(30) Priority: 03.07.2020 IT 202000016123
(43) Date of publication of application: 10.05.2023
(73) Proprietor: New and Best H.F. S.r.l., 76121 Barletta (BT) (IT)
(72) Inventor: DORONZO, Michele, 76121 Barletta (BT) (IT)
(74) Representative: Fabiano, Piero
(86) International application number: PCT/IB2021/055844
(87) International publication number: WO 2022/003580

(56) References cited:
- EP-A1- 2 859 807
- WO-A1-2007/049838
- US-A1- 2018 020 772

## Description

### Field of the invention

The present invention relates to the field of footwear and, in particular, to a process for making an insole for shoes and the insole obtained by this process. More particularly, the present invention relates to a process for making an insole and/or footbed for shoes and the insole and/or footbed obtained by this process.

### Known art

As is known, currently the insoles or footbeds of trainers or sneakers are increasingly technical and provide different characteristics to the shoe and the user.

In general, in order to try to obtain comfort, softness, polyurethane foam is known to be used for the insoles, which however is subjected to continuous and cyclic stresses of the walk and tends to collapse on itself or to flatten.

In an attempt to provide structural stiffness, inserting inserts of stiff material in given positions of the insole is also known.

These inserts provide stiffness to the insole, but can result in a loss of comfort since they are perceived by the user as a discontinuity of stiffness under the foot.

In order to try to solve the above-mentioned problems, a method has been proposed for making an insole and/or footbed made of two polyurethane materials, described in the utility model IT202016000111639 in the name of the same Applicant.

However, the Applicant has observed that the implementation of what was described in the utility model application IT202016000111639 is complex and not efficient in terms of hourly production and, consequently, production costs.

The Applicant has in fact observed that the making of the insole described in IT202016000111639 occurred with a double casting technique in a single mould. In other words, inside the same mould, the two components constituting the insole, which were coupled to each other, were made. Between the first casting and the second casting, the lid or male mould was replaced.

According to this method, before the mould can be opened at the end of the first casting operation, a certain period of time must elapse in order to allow the material to stabilise. In other words, assuming a time T for the first casting operation, e.g., 4 minutes, at the end of the first casting step, a time of at least T/2 must elapse, i.e. a time greater than 2 minutes to stabilise the material.

However, since a time T with the mould closed is also necessary to stabilise the material at the end of the second casting, the overall time for extracting the insole from the mould could not be less than at least T+T/2, i.e. for example 6 minutes, a time therefore too long to produce a single piece.

Such a high time of unit production makes the process uncompetitive.

The Applicant has also observed that attempting to reduce the mould opening time in the first or second casting step resulted in a very high quantity of waste.

The Applicant has also noticed that with the method described in the utility model application IT202016000111639, if the first casting product (first casting) was affected by casting burrs or other moulding defects, these could not be removed. The product of the first casting which was not yet stabilised could not, in fact, be removed from the mould. Therefore, on the same mould the second casting was made, which incorporated the burrs and possible further moulding defects, thus resulting in unaesthetic defects of the finished product.

The Applicant has therefore found the need to make a new process for making an insole and/or footbed composed of at least two coupled components made of polyurethane and/or thermoplastic polyurethane materials having different density, which does not have the drawbacks of the known art. WO 2007/049838 A1 discloses a process for making an insole composed of at least two components in a mould.

### Summary of the invention

Therefore, the present invention concerns a process for making an insole and/or footbed according to appended claim 1.

The present invention, in the aforesaid aspect, may have at least one of the preferred features described below.

Preferably, the first polyurethane material adapted to make said first supporting element has a Shore A hardness of between 25 and 55.

Advantageously, the first polyurethane material adapted to make the first supporting element comprises isocyanate and polyol.

Conveniently, the first polyurethane and/or thermoplastic polyurethane material adapted to make said first supporting element comprises an amount of isocyanate of between 40 and 70 parts by weight with respect to 100 parts by weight of polyol.

Preferably, the second polyurethane and/or thermoplastic polyurethane material adapted to make the second supporting element has a Shore A hardness of between 5 and 30.

Advantageously, the second polyurethane and/or thermoplastic polyurethane material adapted to make the second supporting element comprises isocyanate and polyol, said isocyanate having an amount of between 25 and 50 parts by weight with respect to 100 parts by weight of polyol.

Conveniently, the step of allowing the second foamable polyurethane and/or thermoplastic polyurethane material to foam to make said second supporting element is implemented so that the negative shape of said second supporting element is defined, at least partially, by the coupling between the first supporting element and second upper lid of said second mould.

Preferably, the step of casting in a first mould a first foamable polyurethane and/or thermoplastic polyurethane material is carried out on a first rotary table machine comprising a plurality of first moulds arranged circumferentially and rotatable along a circumferential path.

Advantageously, the process comprises a step of inserting at least one insert into a seat in said first supporting element before inserting said first supporting element into a second mould.

Further characteristics and advantages of the invention will become more apparent from the detailed description of some preferred but not exclusive embodiments of a process for making an insole and/or footbed for shoes.

### Brief description of the drawings

Such description will be set forth hereinafter with reference to the appended drawings provided for indicative, and therefore non-limiting, purpose only, wherein:

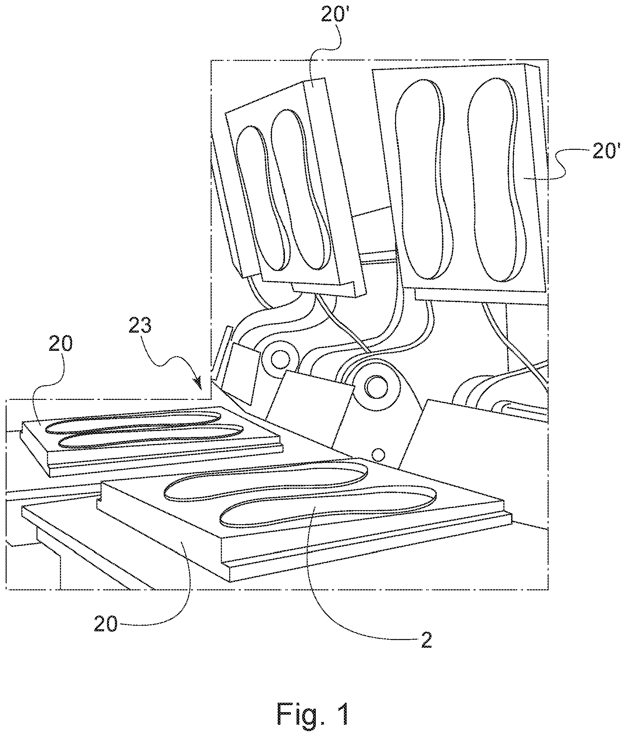

- Figure 1 shows a schematic view of a rotary table machine equipped with a plurality of first moulds for each making a first supporting element according to the present invention;
- Figure 2 shows a schematic view of a second rotary table machine equipped with a plurality of second moulds for each making a second supporting element according to the present invention;
- Figures 3a and 3b show a schematic perspective view, respectively assembled and partially exploded, of a first insole and/or footbed made by the process according to the present invention; and
- Figures 4a, 4b show a schematic perspective view, respectively assembled and partially exploded, of a second insole and/or footbed made by the process according to the present invention.

### Detailed description of embodiments of the invention

With reference to the figures, an insole and/or footbed for shoes made by the process according to the present invention is depicted by the reference numeral 10.

In particular, the insole and/or footbed 10 is made of at least two foamable polyurethane and/or thermoplastic polyurethane materials of different stiffness.

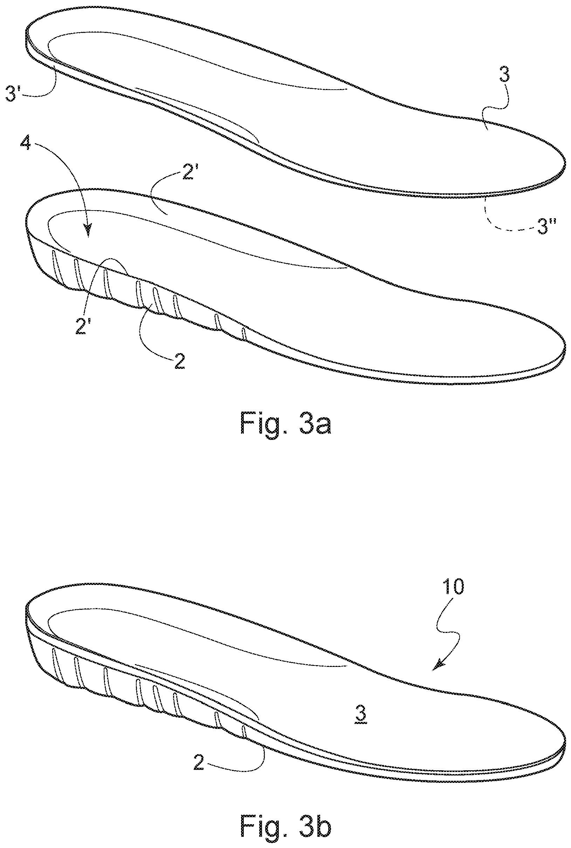

As can be seen in figures 3a, 3b, the insole has a first supporting element 2 directed toward the ground and to provide structural stiffness to the insole and/or footbed 10. The first supporting element 2 is configured so as to accommodate, in a hull-shaped portion 4 thereof, a second supporting element 3 configured to contact the user's foot.

In the figures 3a, 3b, the first 2 and the second 3 supporting elements extend in a longitudinal direction for the whole foot of the user and, consequently, for the whole shoe. Alternatively, the first 2 and the second 3 supporting elements could extend for a smaller dimension, e.g., for 60% or 50% of the total longitudinal extension of the user's shoe or foot, without departing from the protection scope of the present invention, as defined by the claims.

Longitudinal direction means the direction of extension of the shoe, which can be identified by a straight line substantially at the centre-line of the sole, passing between the portion intended to accommodate the heel and the portion intended to accommodate the toes.

Again with reference to figures 3a, 3b, the first 2 and the second 3 supporting elements have substantially the same shape in plan view, apart from a slight perimeter offset toward the outside, of the order of a few mm, of the first supporting element 2.

The first supporting element 2 is made of polyurethane foam with a Shore A hardness of between 25 and 55, more preferably a Shore A hardness of between 30 and 50.

The first supporting element 2 does not have constant thickness along its extension but a variable thickness, preferably a thickness which varies between 20 and 2 mm.

The thickness of the first supporting element 2 varies according to the anatomicity to be provided to the same first element.

The first supporting element 2 has a hollow portion or a cavity 4 such as to completely house the second supporting element 2.

In particular, the first supporting element is arranged so as to form a cavity or a hull adapted to completely house the first supporting element 2.

The cavity in figures 3a, 3b is obtained by an upward folding of the outer perimeter edge 2' of the first supporting element 2.

The first supporting element 2 has a thickness which varies along its extension both in the longitudinal and transverse directions.

Transverse direction means a direction substantially orthogonal to the longitudinal direction.

In figure 3b, the first element 2 has a minimum thickness at its perimeter edge 2'.

Preferably, the first supporting element 2 is made of a polyurethane foam or thermoplastic polyurethane (tpu) foam comprising isocyanate, polyol and additives.

The first supporting element 2 is made of a polyurethane foam and/or thermoplastic polyurethane foam comprising an amount of isocyanate of between 40 and 70 parts by weight with respect to 100 parts by weight of polyol.

At the end of the production process of the insole 10, described in greater detail below, the second supporting element 3 is coupled and enclosed at least on its side surfaces 3' and on those 3" facing downwards from the first supporting element 2.

The second element 3 is also made of polyurethane foam or thermoplastic polyurethane (tpu) foam with a Shore A hardness lower than that of the first element 2, preferably a Shore A hardness lower than 15% with respect to the hardness of the material making the first supporting element 2.

Preferably, the second element 3 has a Shore A hardness of between 5 and 30, more preferably a Shore A hardness of between 10 and 25.

Preferably, the second supporting element 3 is made of a polyurethane foam and/or thermoplastic polyurethane foam comprising isocyanate, polyol and additives.

The second supporting element 3 is made of a polyurethane foam and/or thermoplastic polyurethane foam comprising isocyanate, preferably an amount of isocyanate of between 25 and 50 parts by weight with respect to 100 parts by weight of polyol.

Preferably, the second supporting element 3 has a thickness which varies along its extension both in the longitudinal and transverse directions.

In figures 3a, 3b, the second supporting element 3 has a decreasing thickness away from the portion configured to be placed under the heel of the user to the front portion intended to be positioned, when the insole is inserted in the shoe, under the toes.

The thickness of the second supporting element 3 has a non-continuous decrease away from the portion which, when the shoe is assembled, is at the heel.

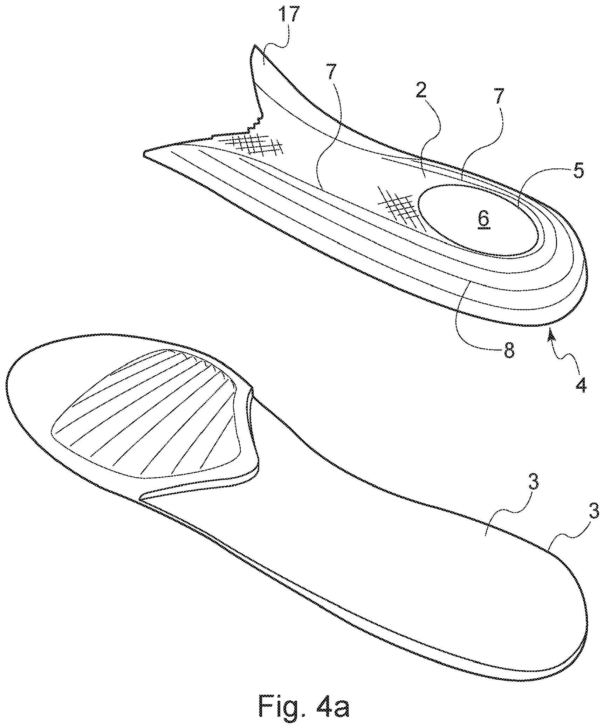

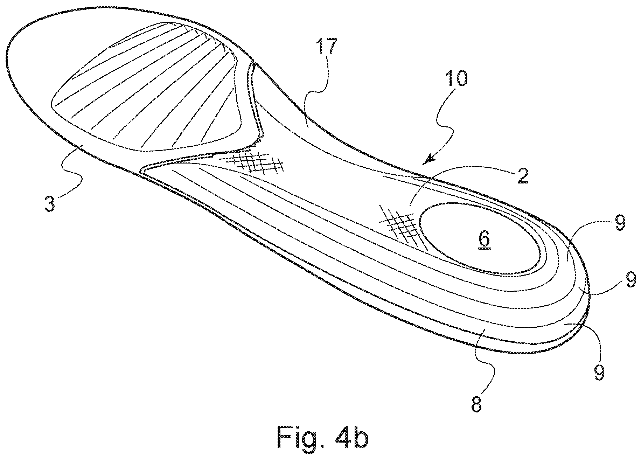

Figures 4a and 4b show a variant of an insole made by the process according to the present invention, described in greater detail below. In particular, in this case, the insole 10 is made of at least four components of different stiffness and coupled together.

In figures 4a and 4b, the first and second supporting elements 2 and 3 are made of the same materials as those shown in figures 3a, 3b and for this reason not further described.

Again with reference to figures 4a, 4b, the first supporting element 2 has, at the heel region, a seat 5 adapted to receive a first insert 6 of jelly-like material which represents the third component of the insole 10.

The insert 6 has a substantially circumferential shape with a radius of between 0.5 and 3 cm.

The first supporting element 2 also has a second peripheral seat 7, of which figure 4b shows an upper edge, configured to house a fourth component referred to as second insert 8, in the present description, which is also preferably of polyurethane or thermoplastic polyurethane material.

The second seat 7 and, consequently, the second insert 8 extend peripherally to the first supporting element 2 so as to wrap the first insert 6. The second seat 7 and, consequently, the second insert 8 (fourth component) extend peripherally to the first supporting element 2 according to a path adapted to substantially form a "U" around the first insert 6 with the two tails of the "U" of different extension.

In particular, the tail of the "U" which, when the insole is assembled, is found on the transversely outermost side of the insole 10, has a greater extension until it reaches substantially the forefoot.

Between the first insert 6 and the second insert 8 there are no contact points. In other words, a portion of the first supporting element 2 is arranged between the first insert 6 and the second insert 8.

The second insert 8 has a series of adjacent ribs 9, preferably four ribs 9, which extend for the entire extension of the second insert 8. In the figures the four ribs 9 also have a "U" arrangement.

The four ribs 9 have a height in the range between 1 and 5 mm.

The vertically outermost surfaces in the direction of the outside of the shoe of the insole 10, i.e. of the first supporting element 2, of the first insert 6 and the second insert 8 (the top of the ribs 9) are substantially coplanar.

In figures 4a, 4b, the cavity of the hull-shaped portion 4 intended to accommodate, at least partially, the second supporting element 3 is located on the opposite side with respect to the seat 7.

In other words, while the seat 7 is facing and overlooking the outside of the insole, i.e. the ground, a cavity of the hull portion 4, not shown in figures 4a, 4b, will be facing the inside of the shoe, i.e. the user's foot.

Further elements or parts of the first supporting element 2, made of inserts of different density, can be provided; by way of example, the crescent-shaped portion 17 in fig. 4b, which should abut with an insole or footbed worn under the plantar arch, could be made of an insert of polyurethane foam or thermoplastic polyurethane foam material having hardness different, preferably lower, than that of the remaining part of the first supporting element 2.

In a further aspect, the invention relates to a process for making an insole and/or footbed 10 composed of at least two components of polyurethane foam or thermoplastic polyurethane foam material, which have different density.

In the case of making the insole of figures 3a, 3b, the process begins by casting into a first mould 20 a first foamable polyurethane and/or a foamable thermoplastic polyurethane material to make a first supporting element 2 comprising at least one hull-shaped portion 4 comprising a cavity.

The first polyurethane and/or thermoplastic polyurethane material has a composition comprising isocyanate, polyol and additives.

The first supporting element 2 is made of a polyurethane foam and/or thermoplastic polyurethane foam comprising an amount of isocyanate of between 40 and 70 parts by weight with respect to 100 parts by weight of polyol.

The first polyurethane and/or thermoplastic polyurethane material adapted to make the second supporting element 2 has a Shore A hardness of between 25 and 55, more preferably a Shore A hardness of between 30 and 50.

The first mould 20 is then closed with an upper lid 20' which reproduces in negative the dimensional characteristics to be provided to the upper surface of the first supporting element 2.

When the first mould 20 is closed, the first polyurethane material is allowed to foam at room temperature for a given time, so as to form the first supporting element 2 of the insole and/or footbed 10.

Subsequently, the first mould 20 is opened, i.e. after at least a stabilisation time of at least 120 seconds.

Therefore, once the first supporting element 2 formed has been extracted, a visual qualitative analysis of the same is carried out, aimed at identifying possible moulding defects and/or burrs.

In case moulding defects or burrs are present, they are removed, if possible, through traditional techniques, which are not further described.

If it is not possible to eliminate moulding defects or burrs, the defective first supporting element 2 is discarded.

At this point, in the case of the insole and/or footbed 10 shown in figures 3a, 3b, it is possible to store the first supporting element 2 or to directly make the second component or second supporting element 3 so as to complete the making of the insole and/or footbed 10.

The first supporting element 2 is made on a first rotary table machine 23 comprising a plurality of first moulds 20 circumferentially and rotatably arranged along a circumferential path.

In order to complete the making of the insole and/or footbed 10 shown in figures 3a, 3b, the first supporting element 2 is inserted in a second mould 21.

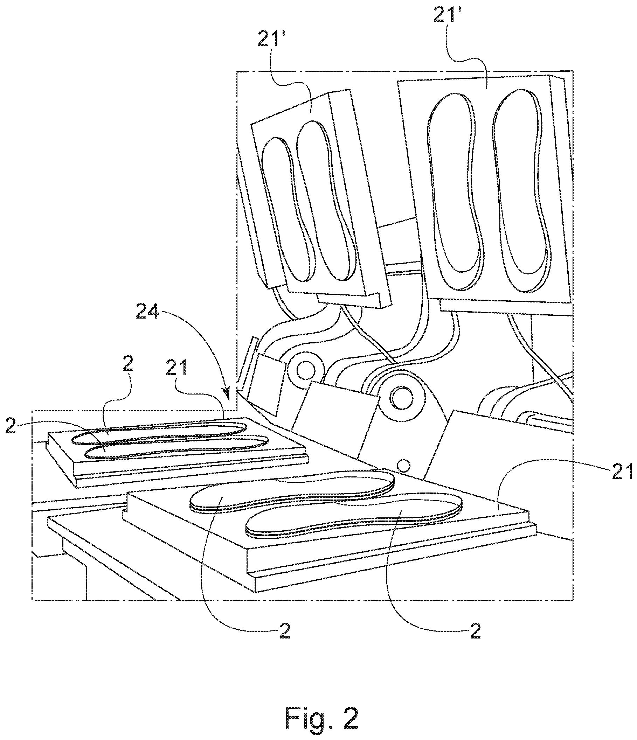

As shown in figure 2, the second mould 21 is provided on a second rotary table machine 24 comprising a plurality of second moulds 21 circumferentially and rotatably arranged along a circumferential path.

Alternatively, the second mould 21 could also be provided on the same first rotary table machine 23 by replacing the first mould 20 with the second mould 21.

The first supporting element 2 is positioned in the second mould 21 so as to have the cavity of the hull-shaped portion 4 thereof so as to accommodate the second polyurethane material.

In other words, the negative shape of the second supporting element 3 is defined, at least partially, by the coupling between the first supporting element 2 and the second upper lid 21' of the second mould 21.

A second foamable polyurethane and/or thermoplastic polyurethane material with a Shore A hardness of at least 15% lower than the hardness of the first material making the first supporting element is then cast into the second mould 21 so that the hull-shaped portion 4 of the first supporting element 2 at least partially accommodates the second foamable polyurethane and/or thermal polyurethane material.

The second polyurethane material will be cast into the second mould to make the second supporting element 3 coupled to the first supporting element 2 and, simultaneously, the finished insole and/or footbed 10, unless burrs and defects are to be removed.

The second polyurethane foam and/or thermoplastic polyurethane foam material adapted to make the second supporting element 3 has a Shore A hardness of between 5 and 30, more preferably a Shore A hardness of between 15 and 25.

The second mould 21 is then closed with an upper lid 21' which reproduces in negative the dimensional characteristics to be provided to the upper surface of the second supporting element 3.

Once the second mould 21 is closed, the second polyurethane material is allowed to foam at room temperature for a given time, so as to form the second supporting element 3 of the insole and/or footbed 10.

The second supporting element 3 is therefore made as already coupled to the first supporting element 2.

Subsequently, the second mould 21 is opened. The second mould 21 is preferably opened after a given stabilisation time, which can also be in this case estimated at about 180 seconds.

The insole and/or footbed 10 formed by the first 2 and the second 3 supporting elements coupled together, is then extracted.

During this step of casting the second polyurethane material, a sub-step of coupling to a covering layer, preferably of leather, can also be provided.

The covering layer may extend entirely across the second supporting element 3 and reproduce, in plan view, the shape of the second supporting element 3.

The covering layer may have a thickness greater than 0.5 mm.

The covering layer is positioned above the second supporting element 3 so as to contact the foot wearing the insole or footbed.

Therefore, once the insole 10 formed has been extracted, a visual qualitative analysis of the same is carried out, aimed at identifying possible moulding defects and/or burrs.

In case moulding defects or burrs are present, they are removed, if possible, through traditional techniques, which are not further described.

If it is not possible to eliminate moulding defects or burrs, the insole and/or footbed 10 is discarded.

The process for making the insole shown in figures 4a, 4b is entirely similar to the one just described except that after the casting step of the first supporting element 2, the first and second inserts, respectively 6 and 8, are inserted therein and in particular in its seats 5 and 7.

Once this operation is carried out, the first supporting element 2 can then be inserted into a second mould 21 to allow the second casting adapted to make the second supporting element 3 combined with the first supporting element 2.

The advantages of the process for making an insole and/or footbed 10 composed of at least two components of foamable polyurethane materials according to the present invention, are numerous. In particular, we remember the possibility of eliminating some moulding defects of the first supporting element at the end of the first moulding step.

Moreover, the process, according to the present invention, allows to reduce the overall unit moulding time of the insole and/or footbed 10 as well as to produce and store the first supporting elements 2 in order to speed up the production of the batches in cases of peaks in demand.

Several changes can be made to the embodiments described in detail, while remaining within the scope of the invention protection, defined by the following claims.

## Claims

1. Process for making an insole and/or footbed (10) composed of at least two components of foamable polyurethane and/or thermoplastic polyurethane materials having different density, comprising the steps of:
- casting in a first mould (20) a first foamable polyurethane and/or thermoplastic polyurethane material with a Shore A hardness greater than 25 to make a first supporting element comprising at least one hull-shaped portion extending for at least 40% of the first supporting element (2) at a rear portion of said first supporting element (2); said hull-shaped portion (4) comprising a cavity defined at least partially by perimeter edges having a height greater than 2 mm;
- closing the first mould (20) with a lid (20');
- opening said first mould (20) after at least one stabilisation time of at least 120 seconds;
- extracting the first supporting element (2) from said first mould (20);
- inserting the first supporting element (2) into a second mould (21);
- casting in said second mould (21) a second foamable polyurethane and/or thermoplastic polyurethane material with hardness less than 15% with respect to the hardness of the first foamable polyurethane and/or thermoplastic polyurethane material so that said hull-shaped portion (4) of the first supporting element (2) accommodates, at least partially, said second foamable polyurethane and/or thermoplastic polyurethane material to make a second supporting element (3) coupled to the first supporting element (2).

2. Process for making an insole and/or footbed according to claim 1, **characterised in that** the first foamable polyurethane and/or thermoplastic polyurethane material adapted to make said first supporting element (2) has a Shore A hardness of between 25 and 55.

3. Process for making an insole according to claim 1, **characterised in that** the first foamable polyurethane and/or thermoplastic polyurethane material adapted to make said first supporting element (2) comprises isocyanate and polyol.

4. Process for making an insole according to claim 1, **characterised in that** the first foamable polyurethane and/or thermoplastic polyurethane material adapted to make said first supporting element (2) comprises an amount of isocyanate of between 40 and 70 parts by weight with respect to 100 parts by weight of polyol.

5. Process for making an insole according to claim 1, **characterised in that** the second polyurethane and/or thermoplastic polyurethane material adapted to make the second supporting element (3) has a Shore A hardness of between 5 and 30.

6. Process for making an insole according to claim 1, **characterised in that** the second foamable polyurethane and/or thermoplastic polyurethane material adapted to make the second supporting element (3) comprises isocyanate and polyol, said isocyanate having an amount of between 25 and 50 parts by weight with respect to 100 parts by weight of polyol.

7. Process for making an insole and/or footbed according to claim 1, **characterised in that** the step of allowing the second foamable polyurethane and/or thermoplastic polyurethane material to foam to make said second supporting element (3) is implemented so that the negative shape of said second supporting element (3) is defined, at least partially, by the coupling between the first supporting element (2) and a second upper lid (21') of said second mould (21).

8. Process for making an insole and/or footbed according to claim 1, **characterised in that** the step of casting in a first mould (20) a first foamable polyurethane and/or thermoplastic polyurethane material is carried out on a first rotary table machine (23) comprising a plurality of first moulds (20) arranged circumferentially and rotatable along a circumferential path.

9. Process for making an insole and/or footbed according to claim 1, **characterised by** comprising a step of inserting at least one insert (6,8) into a seat (5,7) in said first supporting element (2) before inserting said first supporting element (2) into a second mould (21).

## Patentansprüche

1. Verfahren zur Herstellung einer Einlegesohle und/oder eines Fußbettes (10), die/das aus zumindest zwei Komponenten aus schäumbaren Polyurethanmaterialien und/oder thermoplastischen Polyurethanmaterialien mit unterschiedlicher Dichte besteht, umfassend folgende Schritte:
- Gießen eines ersten schäumbaren Polyurethan- und/oder thermoplastischen Polyurethanmaterials mit einer Shore-Härte A größer als 25 in eine erste Form (20) zum Herstellen eines ersten Tragelements, das mindestens einen rumpfförmigen Abschnitt aufweist, der sich über mindestens 40 % des ersten Tragelements (2) an einem hinteren Abschnitt des ersten Tragelements (2) erstreckt; wobei der rumpfförmige Abschnitt (4) einen Hohlraum umfasst, der mindestens teilweise durch Umfangsränder mit einer Höhe größer als 2 mm definiert ist;
- Verschließen der ersten Form (20) mit einem Deckel (20');
- Öffnen der ersten Form (20) nach mindestens einer Stabilisierungszeit von mindestens 120 Sekunden;
- Entnehmen des ersten Tragelements (2) aus der ersten Form (20);
- Einsetzen des ersten Tragelements (2) in eine zweite Form (21);
- Gießen eines zweiten schäumbaren Polyurethan- und/oder thermoplastischen Polyurethanmaterials mit einer Härte kleiner als 15% gegenüber der Härte des ersten schäumbaren Polyurethan- und/oder thermoplastischen Polyurethanmaterials in die zweite Form (21), so dass der rumpfförmige Abschnitt (4) des ersten Tragelements (2) zumindest teilweise das zweite schäumbare Polyurethan- und/oder thermoplastische Polyurethanmaterial aufnimmt, um ein mit dem ersten Tragelement (2) verbundenes zweites Tragelement (3) herzustellen.

2. Verfahren zur Herstellung einer Einlegesohle und/oder eines Fußbettes nach Anspruch 1, **dadurch gekennzeichnet, dass** das erste, zur Herstellung des ersten Tragelements (2) geeignete schäumbare Polyurethan- und/oder thermoplastische Polyurethanmaterial eine Shore-Härte A zwischen 25 und 55 aufweist.

3. Verfahren zur Herstellung einer Einlegesohle nach Anspruch 1, **dadurch gekennzeichnet, dass** das erste, zur Herstellung des ersten Tragelements (2) geeignete schäumbare Polyurethan- und/oder thermoplastische Polyurethanmaterial Isocyanat und Polyol umfasst.

4. Verfahren zur Herstellung einer Einlegesohle nach Anspruch 1, **dadurch gekennzeichnet, dass** das erste, zur Herstellung des ersten Tragelements (2) geeignete schäumbare Polyurethan- und/oder thermoplastische Polyurethanmaterial eine Menge an Isocyanat zwischen 40 und 70 Gew.-%, bezogen auf 100 Gew.-% Polyol, umfasst.

5. Verfahren zur Herstellung einer Einlegesohle nach Anspruch 1, **dadurch gekennzeichnet, dass** das zweite, zur Herstellung des zweiten Stützelements (3) geeignete Polyurethan- und/oder thermoplastische Polyurethanmaterial eine Shore-Härte A zwischen 5 und 30 aufweist.

6. Verfahren zur Herstellung einer Einlegesohle nach Anspruch 1, **dadurch gekennzeichnet, dass** das zweite, zur Herstellung des zweiten Stützelements (3) geeignete schäumbare Polyurethan- und/oder thermoplastische Polyurethanmaterial Isocyanat und Polyol umfasst, wobei das Isocyanat eine Menge zwischen 25 und 50 Gew.-%, bezogen auf 100 Gew.-% Polyol, aufweist.

7. Verfahren zur Herstellung einer Einlegesohle und/oder eines Fußbettes nach Anspruch 1, **dadurch gekennzeichnet, dass** der Schritt des Aufschäumen Lassens des zweiten schäumbaren Polyurethan- und/oder thermoplastischen Polyurethanmaterials zur Herstellung des zweiten Tragelements (3) derart durchgeführt wird, dass die negative Form des zweiten Tragelements (3) zumindest teilweise durch die Verbindung zwischen dem ersten Tragelement (2) und einem zweiten oberen Deckel (21') der zweiten Form (21) definiert wird.

8. Verfahren zur Herstellung einer Einlegesohle und/oder eines Fußbettes nach Anspruch 1, **dadurch gekennzeichnet, dass** der Schritt des Gießens eines ersten schäumbaren Polyurethan- und/oder thermoplastischen Polyurethanmaterials in einer ersten Form (20) auf einer ersten Rundtischmaschine (23) durchgeführt wird, die eine Vielzahl von ersten, in Umfangsrichtung angeordneten und entlang einer Umfangsbahn drehbaren Formen (20) umfasst.

9. Verfahren zur Herstellung einer Einlegesohle und/oder eines Fußbettes nach Anspruch 1, **gekennzeichnet durch** einen Schritt des Einsetzens zumindest eines Einsatzes (6,8) in einen Sitz (5,7) in dem ersten Tragelement (2), bevor das erste Tragelement (2) in eine zweite Form (21) eingesetzt wird.

## Revendications

1. Procédé de fabrication d'une semelle intérieure et/ou d'une assise plantaire (10) composée d'au moins deux composants en matériaux en polyuréthane expansible et/ou en polyuréthane thermoplastique ayant différente densité, comprenant les étapes suivantes:
- couler un premier matériau en polyuréthane expansible et/ou en polyuréthane thermoplastique ayant une dureté Shore A supérieure à 25 dans un premier moule (20) pour créer un premier élément de support comprenant au moins une portion en forme de coque s'étendant le long d'au moins 40% du premier élément de support (2) en correspondance d'une portion postérieure dudit premier élément de support (2); ladite portion en forme de coque (4) comprenant une cavité définie au moins partiellement par des bords périmétriques ayant une hauteur supérieure à 2 mm;
- fermer le premier moule (20) avec un couvercle (20');
- ouvrir ledit premier moule (20) après au moins un temps de stabilisation d'au moins 120 secondes;
- extraire le premier élément de support (2) dudit premier moule (20);
- insérer le premier élément de support (2) dans un second moule (21);
- couler un second matériau en polyuréthane expansible et/ou en polyuréthane thermoplastique ayant une dureté inférieure à 15% par rapport à la dureté du premier matériau en polyuréthane expansible et/ou en polyuréthane thermoplastique dans ledit second moule (21), de sorte que ladite portion en forme de coque (4) du premier élément de support (2) accueille, au moins partiellement, ledit second matériau en polyuréthane expansible et/ou en polyuréthane thermoplastique pour réaliser un second élément de support (3) couplé au premier élément de support (2).

2. Procédé de fabrication d'une semelle intérieure et/ou d'une assise plantaire selon la revendication 1, **caractérisé en ce que** le premier matériau en polyuréthane expansible et/ou en polyuréthane thermoplastique adapté pour réaliser ledit premier élément de support (2) a une dureté Shore A comprise entre 25 et 55.

3. Procédé de fabrication d'une semelle intérieure selon la revendication 1, **caractérisé en ce que** le premier matériau en polyuréthane expansible et/ou en polyuréthane thermoplastique adapté pour réaliser ledit premier élément de support (2) comprend de l'isocyanate et du polyol.

4. Procédé de fabrication d'une semelle intérieure selon la revendication 1, **caractérisé en ce que** le premier matériau en polyuréthane expansible et/ou en polyuréthane thermoplastique adapté pour réaliser ledit premier élément de support (2) comprend une quantité d'isocyanate comprise entre 40 et 70 parties en poids pour 100 parties en poids de polyol.

5. Procédé de fabrication d'une semelle intérieure selon la revendication 1, **caractérisé en ce que** le second matériau en polyuréthane et/ou en polyuréthane thermoplastique adapté pour réaliser le second élément de support (3) a une dureté Shore A comprise entre 5 et 30.

6. Procédé de fabrication d'une semelle intérieure selon la revendication 1, **caractérisé en ce que** le second matériau en polyuréthane expansible et/ou en polyuréthane thermoplastique adapté pour réaliser le second élément de support (3) comprend de l'isocyanate et du polyol, ledit isocyanate étant d'une quantité comprise entre 25 et 50 parties en poids pour 100 parties en poids de polyol.

7. Procédé de fabrication d'une semelle intérieure et/ou d'une assise plantaire selon la revendication 1, **caractérisé en ce que** l'étape consistant à permettre au second matériau en polyuréthane expansible et/ou en polyuréthane thermoplastique de se dilater pour réaliser ledit second élément de support (3) est mise en oeuvre de sorte que la forme négative dudit second élément de support (3) est définie, au moins partiellement, par le couplage du premier élément de support (2) et d'un second couvercle supérieur (21') dudit second moule (21).

8. Procédé de fabrication d'une semelle intérieure et/ou d'une assise plantaire selon la revendication 1, **caractérisé en ce que** l'étape de couler un premier matériau en polyuréthane expansible et/ou en polyuréthane thermoplastique dans un premier moule (20) est effectuée sur une première machine à table rotative (23) comprenant une pluralité de premiers moules (20) disposés de manière circonférentielle et rotative le long d'une trajectoire circonférentielle.

9. Procédé de fabrication d'une semelle intérieure et/ou d'une assise plantaire selon la revendication 1, **caractérisé en ce qu'**il comprend une étape d'insertion d'au moins un insert (6,8) dans un logement (5,7) dans ledit premier élément de support (2) avant d'insérer ledit premier élément de support (2) dans un second moule (21).
